# EUROPÄISCHE PATENTSCHRIFT

(11) **EP 3 384 757 B1**
(45) Veröffentlichungstag und Bekanntmachung des Hinweises auf die Patenterteilung: **12.02.2020**
(21) Anmeldenummer: 17164804.1
(22) Anmeldetag: 04.04.2017
(51) Int. Cl.: A01D 78/10, A01B 73/04

(54) **LANDWIRTSCHAFTLICHE MASCHINE UND VERFAHREN**
AGRICULTURAL MACHINE AND METHOD
MACHINE AGRICOLE ET PROCÉDÉ

(43) Veröffentlichungstag der Anmeldung: 10.10.2018
(73) Patentinhaber: Kverneland Group Kerteminde AS, 5300 Kerteminde (DK)
(72) Erfinder: Hirt, Christian, 78086 Brigachtal (DE); Lamprecht, Tobias, 78315 Radolfzell (DE)
(74) Vertreter: Grünecker Patent- und Rechtsanwälte PartG mbB

(56) Entgegenhaltungen:
- US-A- 5 953 894
- US-B1- 6 220 366

## Beschreibung

Die Erfindung betrifft einen landwirtschaftliche Maschine gemäß Oberbegriff des Patentanspruchs 1 sowie ein Verfahren gemäß Oberbegriff des Patentanspruchs 14.

Beim Hochklappen von Seitenrahmenabschnitten an Tragrahmen solcher relativ großen landwirtschaftlichen Maschinen bis in die Transportstellung, in der sich mit den Seitenrahmenabschnitten bewegende Komponenten zumindest teilweise gegenseitig überlappen, ist zwischen den linken und rechten Seitenrahmenabschnitten eine vorbestimmte Folgesteuerung durchzuführen, damit die sich in der Transportstellung überlappenden Komponenten nicht miteinander kollidieren.

Bei solchen landwirtschaftlichen Maschinen ist es aus diesem Grund bekannt, aufwändige Bewegungs-, Geschwindigkeits- oder Positionssensoren zu verwenden, was teuer und störungsanfällig ist. Es ist ferner üblich, in den beiden Arbeitsleitungen Drosselblenden mit unterschiedlichen Drosselquerschnitten vorzusehen, so dass sich die beiden Seitenrahmenabschnitte beim Hochkappen mit unterschiedlichen Geschwindigkeiten bewegen und ein Seitenrahmenabschnitt seitlich vor dem anderen in der Endposition ist, damit die Komponenten beim gegenseitigen Überlappen nicht kollidieren. Unterschiedlich dimensionierte Drosselblenden in den beiden Arbeitsleitungen können jedoch, beispielsweise bei zähem Hydraulikmedium, unterschiedlich hohem Ölstrom und anderen Umwelteinflüssen, dazu führen, dass ein Seitenrahmenabschnitt vollständig hochgeklappt ist, während der andere Seitenrahmenabschnitt nicht nennenswert hochklappt, da das Hydraulikmedium bevorzugt den Weg über die Drosselblende mit dem größeren Drosselquerschnitt nimmt und erst dann über die andere kleinere Drosselblende strömt, wenn der Förderdruck dadurch steigt, dass der eine Seitenrahmenabschnitt schon auf Anschlag gekommen ist. Es kann auch nur oder zusätzlich ein Stromteiler vorgesehen sein, der den Volumenstrom in ungleiche Volumenströme teilt, sodass ein Seitenrahmenabschnitt langsamer hochklappt als der andere. Sowohl das Prinzip mit den Sensoren als auch den unterschiedlich bemessenen Drosselblenden und/oder dem "asymmetrischen" Stromteiler resultiert in einer Steuerung der Hochklappbewegung, bei der sich die beiden Seitenrahmenabschnitte den gesamten Hochklappvorgang mit unterschiedlichen Geschwindigkeiten über bewegen, und ein Seitenrahmenabschnitt schon in der Endposition ist, während der andere noch relativ weit davon entfernt ist, denn das Ausmaß der Nacheilung nimmt über den gesamten Hubweg stetig zu. Daraus resultiert jedoch eine unerwünscht weite Seitwärtsverlagerung des Maschinenschwerpunkts, was hohe Kippgefahr bedingt, insbesondere, wenn die landwirtschaftliche Maschine zu der Seite schräg geneigt steht, zu der der Maschinenschwerpunkt wandert.

Das Dokument US 5 953 894 A offenbart eine landwirtschaftliche Maschine gemäß dem Oberbegriff des Anspruchs 1.

Der Erfindung liegt die Aufgabe zugrunde, eine landwirtschaftliche Maschine der eingangs genannten Art sowie ein Verfahren zum Hochklappen der Seitenrahmenabschnitte anzugeben, mit denen mit baulich geringem Aufwand hohe Sicherheit gegen kritische Maschinenschwerpunktverlagerung erreicht wird.

Die gestellte Aufgabe wird mit den Merkmalen des Patentanspruchs 1 und verfahrensgemäß mit den Merkmalen des Patentanspruchs 14 gelöst.

Aufgrund des symmetrischen Stromteilers werden die beiden Arbeitsleitungen mit untereinander gleichen Volumenströmen beschickt, so dass sich beide Seitenrahmenabschnitte über den gesamten Hubweg mit der gleichen Geschwindigkeit zwangsweise bewegen würden. Da jedoch an eine Arbeitsleitung der Druckspeicher angeschlossen ist, der ein vorbestimmtes Speichervolumen (eine Speicherblase) aufweist, wird aus dieser einen Arbeitsleitung zunächst oder überlappend der Druckspeicher gefüllt, wenn der zugehörige Seitenrahmenabschnitt seine Hochklappbewegung beginnt oder beginnen möchte, sodass er dem anderen Seitenrahmenabschnitt mit einer im Ausmaß über den Hubweg konstant bleibenden Nacheilung folgt. Da sich die Nacheilung über den Hochklappvorgang nicht verändert, ist ein Seitenrahmenabschnitt früher in seiner Endstellung, so dass die sich mit dem anderen Seitenrahmenabschnitt mit bewegenden Komponenten sich problemlos mit denen des einen Seitenrahmenabschnitts in der Transportstellung überlappen lassen. Der Stromteiler hält präzise die Geschwindigkeit des nacheilenden Seitenrahmenabschnitts, bis und wenn der andere in der Endstellung angelangt ist. Der Maschinenschwerpunkt wandert wegen der Konstant bleibenden Nacheilung nur ein begrenztes Maß aus und ruft deshalb keine nennenswerte Kippgefahr für die landwirtschaftliche Maschine hervor, selbst wenn diese auf schrägem Grund stehen sollte. Über die Größe des Speichervolumens des Druckspeichers lässt sich die Nacheilung exakt vorherbestimmen, wie für das ordnungsgemäße Überlappen der Komponenten gerade notwendig, wobei nur sichergestellt sein muss, dass vor einem Hochkappvorgang der Druckspeicher entleert ist und die vorbestimmte Aufnahmekapazität hat.

Verfahrensgemäß wird von dem bisher üblichen Prinzip unterschiedlich hoher Geschwindigkeiten der hochklappenden Seitenrahmenabschnitte mit der latenten wegen der wachsenden Nacheilung bedingten Kippgefahr abgegangen. Es werden demgegenüber untereinander gleiche Hochklappgeschwindigkeiten für beide Seitenrahmenabschnitte zwangsweise gesteuert, allerdings mit wenigstens einer Verzögerungs- oder Stillstandsphase für nur einen Seitenrahmenabschnitt im Verlauf der Hochklappbewegung. Die Verzögerungs- oder Stillstandsphase kann am Beginn der Hochklappbewegung eingesteuert werden, oder gegebenenfalls auch zu einem willkürlichen Zeitpunkt während der Hochklappbewegung und vor Erreichen der Endstellung. In jedem Fall wird so sichergestellt, dass nur eine bestimmte Konstante Nacheilung entsteht, die so bemessen ist, dass keine nennenswerte Kippgefahr für die landwirtschaftliche Maschine entsteht.

In einer zweckmäßigen Ausführungsform sind in den beiden Arbeitsleitungen untereinander gleich große Drosselblenden enthalten, die gleichartig eindrosseln und zwar die untereinander gleichen Bewegungsgeschwindigkeiten der Seitenrahmenabschnitte einstellen, weitgehend unabhängig von dem vom Steuerventil gelieferten Volumenstrom.

Ferner kann es zweckmäßig sein, zwischen der einen Arbeitsleitung und dem an diese angeschlossenen Druckspeicher eine Drosselblende vorzusehen, die z.B. die Zeitdauer beeinflusst, über welche der Druckspeicher geladen wird. Anstelle der Drosselblende für den Druckspeicher könnte die Verbindungsleitung zum Druckspeicher so bemessen sein, dass sie die gewünschte Drosselwirkung erzeugt. Ggf. ist hier eine Drosselung sogar entbehrlich.

Wichtig ist ferner, dass die jeweilige Drosselblende in der Arbeitsleitung zur beim Hochklappen beaufschlagten Seite des Hydraulikzylinders einen größeren Drosselquerschnitt aufweist als die Drosselblende beim Druckspeicher. Die Drosselquerschnitte können in einem Verhältnis von etwa 2:1 stehen.

Der Stromteiler kann von jeweils einer das Steuerventil mit der jeweiligen Arbeitsleitung direkt verbindenden Leitungsschleife umgangen werden. In der Leitungsschleife ist ein in Strömungsrichtung zum Hydraulikzylinder sperrendes Rückschlagventil enthalten, so dass der Förderstrom vom Steuerventil zur Gänze durch den Stromteiler geleitet wird, um die Seitenrahmenabschnitte hochzuklappen. Beim Absenken der Seitenrahmenabschnitte in die Arbeitsstellung wirken der Stromteiler und die Leitungsschleifen. Gleiche Absenkgeschwindigkeiten für beide Seitenrahmenabschnitte werden z.B. über die Beaufschlagung der Hydraulikzylinder in der Gegenrichtung gesteuert, bzw. über die gleichgroßen Drosselblenden in den Arbeitsleitungen eingehalten. In einer zweckmäßigen Ausführungsform ist die Drosselblende in der der einen Arbeitsleitung zugeordneten Leitungsschleife zwischen einem Knoten in der einen Arbeitsleitung und einem Anschlussknoten des Druckspeichers angeordnet. Hingegen befindet sich das Rückschlagventil zwischen dem Anschlussknoten und einem Knoten in einer den Stromteiler mit dem Steuerventil verbindenden Hauptleitung. Auf diese Weise lässt sich der Druckspeicher nach Erreichen der Transportstellung bei drucklosem System über das Steuerventil entleeren, oder sobald über das Steuerventil die Seitenrahmenabschnitte wieder zur Arbeitsstellung abgesenkt und die Arbeitsleitungen mit dem Tank verbunden werden, so dass der Druckspeicher vor jedem neuerlichen Hochklappvorgang entleert ist.

Im Falle eines doppelseitig beaufschlagbaren Hydraulikzylinders, mit dem auch die Absenkbewegungen der Seitenrahmenabschnitte über das Steuerventil mit Druck gesteuert werden, ist es zweckmäßig, wenn vom Steuerventil eine weitere, sich zu den Hydraulikzylindern aufzweigende, den Stromteiler umgehende Arbeitsleitung ausgeht, und wenn in jedem Arbeitsleitungszweig dieser Arbeitsleitung ein Drosselrückschlagventil oder parallel ein in Strömungsrichtung zum Hydraulikzylinder sperrendes Rückschlagventil und eine Drosselblende vorgesehen ist bzw. sind. Das Rückschlagventil im Arbeitsleitungszweig zwingt den Förderstrom über die Drosselblende, um die Absenkgeschwindigkeit einzustellen.

Dabei ist es zweckmäßig, wenn der Drosselquerschnitt der Drosselblende im Arbeitsleitungszweig größer ist als der Drosselquerschnitt der Drosselblende in der zum Hochklappen beaufschlagten Arbeitsleitung zum Hydraulikzylinder, so dass der Absenkvorgang zügiger ausgeführt werden kann. Beim Absenkvorgang entsteht aus dieser Hydraulikschaltung keine Kippgefahr für die landwirtschaftliche Maschine, da die beiden Seitenrahmenabschnitte im Wesentlichen gleichzeitig und mit gleichen Geschwindigkeiten abgesenkt werden. Das Lösen der sich in der Transportstellung überlappenden Komponenten erfolgt ohne Kollisionsgefahr.

Um die Seitenrahmenabschnitte in der Transportstellung sicher positioniert zu halten, selbst wenn das System drucklos geschaltet wird, z.B. über das Steuerventil, ist es zweckmäßig, dass in jeder Arbeitsleitung zu der beim Hochklappen beaufschlagbaren Seite des Hydraulikzylinders ein in Abströmrichtung zum Stromteiler sperrendes Sperrventil vorgesehen ist, das mit Steuerdruck aus dem zugehörigen Arbeitsleitungszweig der anderen Zylinderseite hydraulisch entsperrbar ist, wenn der Absenkvorgang mit Druckbeaufschlagung über das Steuerventil eingeleitet wird. Das Sperrventil hält den Lastdruck der hochgeklappten Seitenrahmenabschnitte, auch bei Fahrbewegungen oder Schräglage der landwirtschaftlichen Maschine.

Aus Sicherheitsgründen kann es ferner zweckmäßig sein, in der Arbeitsleitung ein, vorzugsweise mechanisch betätigbares, 2/2-Wegeventil vorzusehen, so dass ein Absenkvorgang nur stattfinden kann, wenn zuvor das 2/2-Wegeventil auf Durchgang geschaltet wird.

In einer Ausführungsform überlappen sich in der Transportstellung Bodenlaufräder von Arbeitswerkzeugen und/oder Arbeitswerkzeuge an den linken und rechten Seitenrahmenabschnitten gegenseitig, um in der Transportstellung möglichst kompakte Maschinen-Abmessungen zu erreichen. Diese Überlappung wird erreicht, indem die Komponenten eines Seitenrahmenabschnitts schon in der Transportstellung sind, während die Komponenten des anderen Seitenabschnitts mit der bewusst eingesteuerten Nacheilung in die Überlappung geschwenkt werden.

Um die Überlappung von Bodenlaufrädern kollisionsfrei auszuführen, ist es mit geringem baulichen Aufwand möglich, sich in der Transportstellung gegenseitig überlappende Bodenlaufräder mit unterschiedlich gekröpften Radaufhängungen anzubringen.

In einer speziellen Ausführungsform weist jeder Seitenrahmenabschnitt zwei bis vier über Gelenk verbundene Tragarme auf, an denen beispielsweise jeweils ein Bodenbearbeitungswerkzeug mit einem Bodenlaufrad angeordnet sind.

Anhand der Zeichnung wird eine Ausführungsform des Erfindungsgegenstandes erläutert. Es zeigen:
- Fig. 1: eine Hinteransicht einer landwirtschaftlichen Maschine in Arbeitsstellung,
- Fig. 2: eine Hinteransicht der landwirtschaftlichen Maschine in Transportstellung, und
- Fig. 3: einen Hydraulikschaltplan einer Hydraulikschaltung der landwirtschaftlichen Maschine.

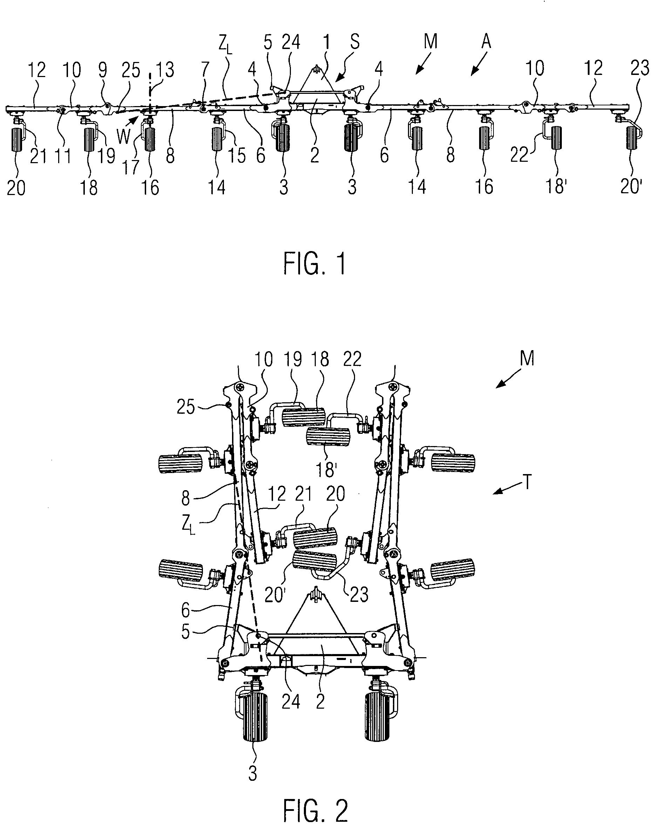

Nachstehend wird die Erfindung anhand einer in den Fig. 1 bis 3 gezeigten landwirtschaftlichen Maschine M, beispielsweise einer Heuwerbungsmaschine, erläutert. Die Erfindung ist jedoch nicht auf den beschriebenen Typ der landwirtschaftlichen Maschine beschränkt, sondern ist bei landwirtschaftlichen Maschinen im Allgemeinen anwendbar, die mit Arbeitswerkzeugen oder Komponenten ausgestattete gegenüberliegende Seitenrahmenabschnitte an einem Tragrahmen aufweisen, welche aus einer abgesenkten Arbeitsstellung in eine hochgeklappte Transportstellung umstellbar sind, in welcher sich, vorzugsweise, mit den Seitenrahmenabschnitten in die Transportstellung bewegte Komponenten gegenseitig überlappen, um in der Transportstellung möglichst kompakte Abmessungen zu erzielen.

Die in Fig. 1 in Arbeitsstellung A gezeigte landwirtschaftliche Maschine weist an einem Tragrahmen 2 mit einem Fahrwerk 3 eine Anhängevorrichtung 1 auf, die an beispielsweise eine Dreipunkt-Aufhängung eines nicht gezeigten Schleppers S ankoppelbar ist, wobei der nicht gezeigte Schlepper über ein Hydrauliksystem verfügt, mit einem sogenannten Schlepperventil, über welches an der landwirtschaftlichen Maschine M hydraulisch antreibbare Arbeitswerkzeuge W mit hydraulischer Energie versorgbar sind. Alternativ (nicht gezeigt) könnte die landwirtschaftliche Maschine M ein eigenes Hydrauliksystem mit einem eigenen Steuerventil 26 aufweisen. Bei der hier gezeigten Maschine M werden die Werkzeuge W z.B. über Gelenkwellen und die Zapfwelle des Schleppers S angetrieben.

An dem in Fig. 1 gezeigten Tragrahmen 2 sind linke und rechte, sich in Bezug auf den Tragrahmen 2 zumindest im Wesentlichen gegenüberliegende Seitenrahmenabschnitte so angebracht, dass sie aus der in Fig. 1 gezeigten Arbeitsstellung A in die in Fig. 2 gezeigte Transportstellung T zueinander hochklappbar und, vorzugsweise, endseitig umfaltbar sind.

Die Seitenrahmenabschnitte sind in Bezug auf den Tragrahmen 2 in etwa symmetrisch, d.h., bei der in Fig. 1 gezeigten landwirtschaftlichen Maschine unterscheiden sich die Seitenrahmenabschnitte nur durch geringe Details, beispielsweise Radaufhängungen jedem Bodenbearbeitungswerkzeug W zugeordneter Bodenlaufräder. Darauf wird im Detail später eingegangen.

Jeder Seitenrahmenabschnitt ist in einem Gelenk 4 an dem Tragrahmen 2 schwenkbar angelenkt, wobei die Gelenkachse im Wesentlichen in Fahrtrichtung und bodenparallel orientiert ist (in Blickrichtung auf Fig. 1). Im Gelenk 4 ist ein innerster Tragarm 6 angelenkt, der ein nicht gezeigtes Arbeitswerkzeug, beispielsweise einen Rechkreisel, sowie ein Bodenlaufrad 14 trägt, das an einer Aufhängung 15, z.B. nachlaufend und selbstlenkend, angebracht ist. Alternativ könnten alle Bodenlaufräder auch lenkbar sein (nicht gezeigt).

Am Ende des Tragarms 6 befindet sich ein weiteres Gelenk 7 für einen weiteren Tragarm 8, der wiederum ein beispielsweise um eine Achse 13 drehantreibbares Bodenbearbeitungswerkzeug W und mit einer Aufhängung 17 ein Bodenlaufrad 16 trägt. Am Ende des Tragarms 8 ist in einem Gelenk 9 hier ein weiterer Tragarm 10 schwenkbar angelenkt, der seinerseits über ein Gelenk 11 einen außenliegenden Tragarm 12 trägt. Die Gelenke 4, 7, 9 und 11 dienen dazu, eine günstige Bodenanpassung der Seitenrahmenabschnitte bei der Fahrt in der Arbeitsstellung A sicherzustellen.

Die Radaufhängung 17 des Bodenlaufrads 16 am Tragarm 8 ist um 180° verdreht zur Radaufhängung 15 des Bodenlaufrades 14 angeordnet, jedoch mit im Wesentlichen gleicher Kröpfung. Das Bodenlaufrad 18 am Tragarm 10 des in Fig. 1 linken Seitenrahmenabschnitts weist hingegen eine stärker gekröpfte Aufhängung 19 auf, die relativ zur Aufhängung 17 um 180° gedreht ist. Schließlich weist das äußerste Bodenlaufrad 20 am Tragarm 12 eine Aufhängung 21 auf, die im Wesentlichen der Aufhängung 15 des Bodenlaufrades 14 entspricht.

Im in Fig. 1 rechten Seitenrahmenabschnitt entsprechen die Bodenlaufräder 14 und 16 mit ihren Aufhängungen den Bodenlaufrädern 14 und 16 des linken Seitenrahmenabschnitts. Jedoch weist das Bodenlaufrad 18' am Tragarm 10 des rechten Seitenrahmenabschnitts gegenüber der Aufhängung 17 eine deutlich stärker gekröpfte Aufhängung 22 auf, und weist auch das äußerst rechte Bodenlaufrad 20' des Tragarmes 12 des rechten Seitenrahmenabschnitts gegenüber der Aufhängung 21 eine stark nach außen gekröpfte Aufhängung 23 auf. Obwohl die Abstände der Gelenke 4, 7, 9 und 11 vom Tragrahmen 2 in den linken und rechten Seitenrahmenabschnitten in Fig. 1 gleich sein können, stehen die Bodenlaufräder 18 und 18' versetzt gegenüber ihren Achsen 13, und zwar das Bodenlaufrad 18 und das Bodenlaufrad 18' nach rechts versetzt, das äußerst linke Bodenlaufrad 20 in etwa auf die Achse der Aufhängung 21 am Tragbalken 12 ausgerichtet, und ist das äußerst rechte Bodenlaufrad 20' im rechten Seitenrahmenabschnitt aufgrund der stark gekröpften Aufhängung 23 nach rechts gegenüber seiner Achse versetzt ist. Diese individuellen Versetzungen ermöglichen es bei der gezeigten Ausführungsform, ohne Beschränkung auf diese Ausführungsform, in der in Fig. 2 gezeigten Transportstellung T die Bodenlaufräder 18, 18' und 20, 20' als sich mit den Seitenrahmenabschnitten in die Transportstellung T bewegende Komponenten in der Mitte gegenseitig zu überlappen, um Transportbreite zu sparen. In Fig. 2 nicht im Detail gezeigte Arbeitswerkzeuge W können sich zum Teil ebenfalls überlappen.

Die Überlappung der Komponenten gemäß beispielsweise Fig. 2 bedingt, dass sich die Seitenrahmenabschnitte beim Hochklappen in die in Fig. 2 gezeigte, zusätzlich noch nach innen unten umgefaltete Transportstellung T nach einem vorbestimmten Folgesteuerungsprinzip bewegen, d.h., ein Seitenrahmenabschnitt schon in seiner Endstellung entsprechend der Transportstellung T ist, während sich der gegenüberliegende Seitenrahmenabschnitt noch erst zu dieser Endstellung entsprechend auch seiner Transportstellung T bewegt.

Entlang des Tragrahmens 2 können mehrere jeweils paarweise angeordnete und wie in Fig. 2 gezeigt in die Transportstellung T hochklappbare Seitenrahmenabschnitte vorgesehen sein. Die Seitenrahmenabschnitte brauchen auch nicht, wie in Fig. 1 und 2 gezeigt, vier relativ zueinander schwenkbare Tragarme zu umfassen, sondern es können auch weniger oder mehr Tragarme vorgesehen sein, und entsprechend weniger oder mehr Bodenlaufräder und Bearbeitungswerkzeuge.

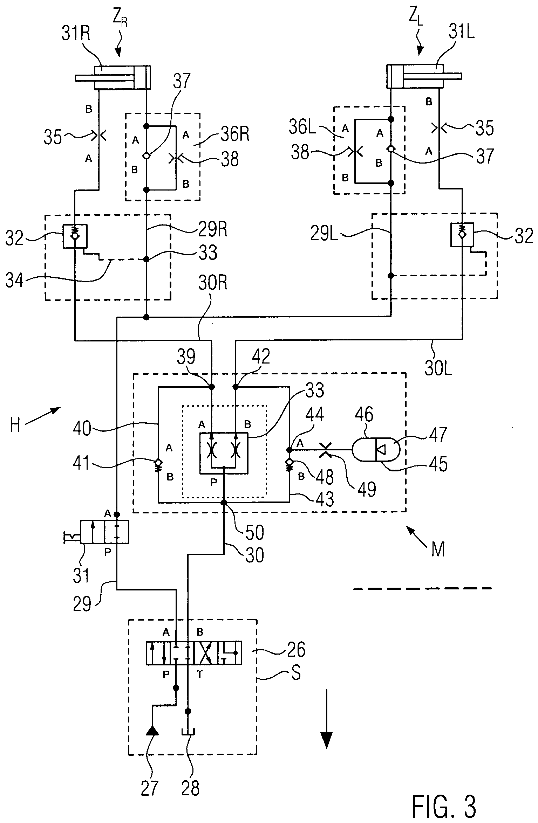

Zum Hochklappen der Seitenrahmenabschnitte ist in den Fig. 1 und 2 beispielsweise ein Hydraulikzylinder ZL (der linke Hydraulikzylinder) angedeutet, der sich zwischen einer Anlenkung 24 am Tragrahmen 2 und einer Anlenkung 25 am Tragarm 8 erstreckt, und beispielsweise so ausgelegt ist, dass seine Kolbenstange in der Transportstellung in den Zylinder eingefahren ist. Ein rechter Hydraulikzylinder ZR (nur in Fig. 3 gezeigt) ist spiegelbildlich verbaut. Weitere, nicht gezeigte Hydraulikzylinder können zwischen anderen Tragarmen 6, 8, 10, 12 wirkungsmäßig vorgesehen sein, oder nur Federn oder andere Kraftspeicher.

Am Tragrahmen 2 sind beispielsweise Anschläge 5 vorgesehen, gegen welche sich die Tragarme 6 in der Transportstellung T anlegen, und auch Anschläge an den Tragarmen 8, gegen welche sich die Tragarme 12 in der Transportstellung T anlegen.

Der jeweilige Hydraulikzylinder ZL, ZR wird zum Hochklappen der Seitenrahmenabschnitte in die Transportstellung 2 über eine Hydraulikschaltung H gemäß Fig. 3 betätigt.

Die Hydraulikzylinder ZL, ZR für die linken und rechten Seitenrahmenabschnitte sind in der gezeigten Ausführungsform doppelt wirkend ausgelegt. Gegebenenfalls könnten alternativ auch einfach (nur zum Hochklappen) wirkende Hydraulikzylinder vorgesehen sein, vorausgesetzt, dass andere Mittel oder Gewichtskräfte die Seitenrahmenabschnitte wieder in die Arbeitsstellung A bringen.

Die Hydraulikzylinder ZL und ZR in Fig. 3 haben zum Hochklappen der Seitenrahmenabschnitte der Fig. 1 und 2 mit Hydraulik beaufschlagbare Seiten 31L, 31R, hier die Kolbenstangenseiten zum Einziehen der Kolbenstangen, an denen beispielsweise die Tragarme 8 angelenkt sind. Die Darstellung in Fig. 3 entspricht einer Vorderansicht der Maschine M, sodass z.B. die linken und rechten Seiten gegenüber den Hinteransichten der Fig. 1 und 2 vertauscht gezeigt sind.

Zur Hydraulikschaltung H gehört ein Steuerventil 26, beispielsweise das sogenannte Schlepperventil des Schleppers S, an den die landwirtschaftliche Maschine im Betrieb gekoppelt ist und in Richtung des Pfeils in Fig. 3 fährt. Das Steuerventil 26 ist in der gezeigten Ausführungsform ein 4/4-Wegeventil und an eine Druckquelle 27 und einen Tank 28 angeschlossen. Das Steuerventil 26 hat zwei Steuerstellungen, sowie zwei Neutralstellungen. In der gezeigten Neutralstellung sind alle Verbindungen über das Steuerventil 26 unterbrochen, während in der zweiten Neutralstellung Ausgänge A, B des Steuerventils 26 mit dem Tank 28 verbunden sind (Arbeitsleitungen entlastet).

An den Ausgang B des Steuerventils 26 ist eine Hauptleitung 30 angeschlossen, die über einen Knoten 50 zum Eingang P eines Stromteilers 33 verläuft, der den Förderstrom vom Steuerventil 26, in dessen dritter Steuerstellung von links, im Verhältnis von 50:50 in untereinander gleiche Volumenströme in Arbeitsleitungen 30L und 30R zu den Seiten 31L und 31R der beiden Hydraulikzylinder ZL und ZR aufteilt.

Ein Kennzeichen dieses Stromteilers 33 ist, dass der jeweilige Volumenstrom zu gleichen Teilen aufgeteilt wird, unabhängig von Änderungen des Drucks in der Hauptleitung 30 oder des Drucks in den Arbeitsleitungen 30L, 30R. In Rückströmrichtung kann der Stromteiler 33 z.B. zwei Volumenströme zusammenführen.

Im weiteren Verlauf jeder Arbeitsleitung 30L, 30R ist ein in Strömungsrichtung zum Stromteiler 33 sperrendes Sperrventil 32 (beispielsweise ein Rückschlagventil) enthalten, und zwischen dem Sperrventil 32 und der Seite 31L bzw. 31R eine Drosselblende 35 mit einem vorbestimmten Drosselquerschnitt, beispielsweise hier etwa 1,5 mm Durchmesser. Beide Drosselblenden 35 sind gleichgroß

Da die Hydraulikzylinder ZL, ZR doppelt wirkend arbeiten, erstreckt sich vom Ausgang A des Steuerventils 26 eine weitere Arbeitsleitung 29, die sich hinter einem hier beispielsweise mechanisch betätigbaren 2/2-Wegeventil 31 (ein Sicherheitsventil) in Arbeitsleitungszweige 29L, 29R zu den Kolbenseiten der beiden Hydraulikzylinder ZL, ZR aufzweigt. Von jedem Arbeitsleitungszweig 29L, 29R zweigt an einem Knoten 33 eine Steuerleitung 34 zum jeweils dieser Seite zugeordneten Sperrventil 32 ab, um dieses bei Druckbeaufschlagung des Arbeitsleitungszweigs 29L, 29R hydraulisch zu entsperren. Im weiteren Verlauf jedes Arbeitsleitungszweigs 29L ist in der gezeigten Ausführungsform ein Drosselrückschlagventil 36L, 36R enthalten, das beispielsweise aus einem in Strömungsrichtung zum Hydraulikzylinder sperrenden Rückschlagventil 37 und einer dazu parallelen Drosselblende 38 besteht. Diese beiden hydraulischen Komponenten könnten auch parallel eigenständig verbaut sein. Die Drosselblende 38 hat beispielsweise einen Drosselquerschnitt von etwa 2,0 mm im Durchmesser, ist also größer als der Drosselquerschnitt der Drosselblende 35. Beide Drosselblenden 38 können gleichgroß sein.

Von einem Knoten 50 in der Hauptleitung 30 zwischen dem Steuerventil 26 und dem Stromteiler 33 zweigen den Stromteiler 33 umgehende Leitungsschleifen 40 und 43 ab, die an Knoten 39 und 42 mit den Arbeitsleitungen 30R und 30L verbunden sind, und jeweils ein Rückschlagventil 41 bzw. 48 enthalten, das in Strömungsrichtung zum Hydraulikzylinder ZL oder ZR sperrt.

Die in Fig. 3 rechte Leitungsschleife 43 (für die linke Seite der Maschine M) ist an einem Knoten 44 mit einem Druckspeicher 45 verbunden, der beispielsweise ein Speichervolumen 46 (Speicherblase) enthält und durch einen federbelasteten Kolben oder Gasdruck auf einer Membrane bei 47 vorgespannt ist. Zwischen dem Knoten 44 und dem Druckspeicher 45 ist eine Drosselblende 49 vorgesehen, deren Drosselquerschnitt kleiner ist als der Drosselquerschnitt der Drosselblende 35, und die z.B. einen Durchmesser von 0,7 mm hat. Der Druckspeicher 45 ist beispielsweise auf etwa 40 bar vorgespannt, während die Hydraulikzylinder ZL, ZR die Hochklappbewegung erst ab etwa 70 bar aufnehmen.

Anstelle der Drosselblende 49 könnte die in den Druckspeicher 45 führende Leitung so bemessen sein, dass die gewünschte Drosselwirkung entsteht . Es ist also denkbar, in der Verbindung zwischen der Arbeitsleitung 30 L und dem Druckspeicher 45 keine Drosselung vorzusehen.

### Funktion:

Um die beiden Seitenrahmenabschnitte aus der in Fig. 1 gezeigten Arbeitsstellung A in die in Fig. 2 gezeigte Transportstellung T hoch und zueinander zu klappen, wird das Steuerventil 26 in Fig. 3 in die dritte Steuerstellung von links geschaltet, so dass die Druckquelle 27 mit der Hauptleitung 30 und die Arbeitsleitung 29 mit dem Tank 28 verbunden sind. Der Druckspeicher 45 ist entladen. Das 2/2-Wegeventil 31 wird aus der gezeigten Absperrstellung in seine Durchgangsstellung geschaltet. Die Kolbenstangen der Hydraulikzylinder ZL, ZR sind ausgezogen. Aufgrund der in dieser Strömungsrichtung sperrenden Rückschlagventile 41, 48 passiert der Förderstrom in der Hauptleitung 30 den Stromteiler 33, der ihn zu gleichen Teilen (50:50) in die Arbeitsleitungen 30L, 30R aufteilt (gleiche Mengen pro Zeiteinheit). Über das in Fig. 3 linke offene Sperrventil 32 wird die Seite 31R beaufschlagt. Der in der hinteransicht in Fig. 1 rechte Seitenrahmenabschnitt in Fig. 1 beginnt, mit einer durch die Drosselblende 35 eingedrosselten Geschwindigkeit hochzuklappen. Von der Kolbenseite des Hydraulikzylinders ZR verdrängtes Hydraulikmedium wird über das dann öffnende Rückschlagventil 37 und das durchgängige 2/2-Wegeventil 31 zum Tank 28 ausgeschoben. Die Drosselblende 38 ist wirkungslos. Obwohl gleichzeitig zur Arbeitsleitung 30L der gleiche Volumenstrom eingespeist wird wie in die Arbeitsleitung 30R vom Stromteiler 33, beginnt der Hydraulikzylinder ZL in Fig. 3 nicht sofort seine Bewegung, sondern wird zunächst z.B. über die Drosselblende 49, der leere Druckspeicher 45 geladen, bis sein Speichervolumen gefüllt ist, beispielsweise mit dem Druck von 40 bar. Dies erzeugt eine Verzögerungs- oder sogar Stillstandsphase für die Hochklappbewegung des linken Seitenrahmenabschnitts in Fig. 1, d.h., der linke Hydraulikzylinder ZL beginnt seine Bewegung erst etwas später als der rechte Hydraulikzylinder ZR. Sobald jedoch der linke Hydraulikzylinder ZL nacheilend seine Bewegung aufgenommen hat, bewegt er sich über den gesamten Hochklapphub mit der gleichen Geschwindigkeit wie der rechte Hydraulikzylinder ZR, so dass sich der Maschinenschwerpunkt nur geringfügig aus der Mitte verlagert, abhängig vom Ausmaß der konstant bleibenden Nacheilung.

Dies bedeutet, dass der rechte Seitenrahmenabschnitt seine in Fig. 2 gezeigte endgültige Transportposition bereits erreicht hat, ehe z.B. die Bodenlaufräder 18, 20 des linken Seitenrahmenabschnitts mit einer Schwenkbewegung in die überlappende Kondition mit den Bodenlaufrädern '18, 20 des rechten Seitenrahmenabschnitts gebracht werden.

Sobald die Transportstellung gemäß Fig. 2 erreicht ist, die gegebenenfalls durch nicht gezeigte Mittel verriegelt wird, kann das Steuerventil 26 in z.B. die rechte Neutralstellung geschaltet werden, in der die Hauptleitung 30 und die Arbeitsleitung 29 zum Tank 28 entlastet werden. Die Sperrventile 32 halten ihre Lasten selbst bei weitgehend drucklosem System (Rücklaufdruck). Außerdem entleert sich der Druckspeicher 45 über das dann öffnende Rückschlagventil 48 zum Tank, so dass er für den nächsten Hochklappvorgang wieder sein aufnahmebereites Speichervolumen 46 bietet.

Um aus der in Fig. 2 gezeigten Transportstellung T wieder in die Arbeitsstellung A von Fig. 1 umzustellen, wird das Steuerventil 26 in die linke Steuerstellung gebracht, in der die Druckquelle 27 mit der Arbeitsleitung 29 und die Hauptleitung 30 mit dem Tank 28 verbunden sind. Sobald das 2/2-Wegeventil 31 dann in die Durchgangsstellung umgeschaltet wird, werden die Arbeitsleitungzweige 29L, 29R mit ihren gleichgroßen Drosselblenden 38 beaufschlagt, dass beide Hydraulikzylinder ZL mit gleichen Geschwindigkeiten auch gesteuert von den gleichgroßen Drosselblenden 35 ausfahren, nachdem über die Steuerleitungen 34 die Sperrventile 32 hydraulisch entsperrt sind. Das jeweils von der Kolbenstangenseite ausgeschobene Hydraulikmedium geht durch die Drosselblende 35 und strömt unter zumindest teilweiser Umgehung des Stromteilers 33 durch die Leitungsschleifen 43, 40 und die dann öffnenden Rückschlagventile 41, 48 zum Tank 28, wobei oder nachdem der Druckspeicher 45 entleert wird. Der Stromteiler 33 kann ggf. auch in Rückstromrichtung ausgleichend wirken.

## Patentansprüche

1. Landwirtschaftliche Maschine (M), insbesondere Heuwerbungsmaschine, mit einem ein Fahrwerk (3) aufweisenden Tragrahmen (2), an welchem jeweils linke und rechte, einander am Tragrahmen (2) im Wesentlichen gegenüberliegende und Werkzeuge (W) tragende Seitenrahmenabschnitte jeweils durch mindestens einen Hydraulikzylinder (ZL, ZR) zwischen einer abgesenkten Arbeitsstellung (A) zu einer zueinander nach oben geklappten Transportstellung (T) verstellbar sind, in der sich mit beiden Seitenrahmenabschnitten bewegende Komponenten gegenseitig überlappen, und mit einer an wenigstens ein Steuerventil (26) angeschlossenen Hydraulikschaltung (H), in der Arbeitsleitungen (30L, 30R) zumindest zu zum Hochklappen der linken und rechten Seitenrahmenabschnitte beaufschlagbaren Seiten (31L, 31R) der Hydraulikzylinder (ZL, ZR) führen, **dadurch gekennzeichnet, dass** die Hydraulikschaltung (H) zwischen dem Steuerventil (26) und den beiden Arbeitsleitungen (30L, 30R) einen Stromteiler (33) enthält, der zumindest in Strömungsrichtung zu den beaufschlagbaren Seiten (31L, 31R) einen vom Steuerventil (26) gelieferten Volumenstrom im Verhältnis von 50:50 in die Arbeitsleitungen (30L, 30R) aufteilt, und dass an eine Arbeitsleitung (30L oder 30R) wenigstens ein Druckspeicher (45) angeschlossen ist, dessen Speichervolumen (46) vor dem Hochklappen entleerbar ist.

2. Landwirtschaftliche Maschine nach Anspruch 1, **dadurch gekennzeichnet, dass** in der Arbeitsleitung (30L, 30R) jeweils eine Drosselblende (35) vorgesehen ist, und dass die Drosselblenden (35) zumindest im Wesentlichen gleiche Drosselquerschnitte aufweisen.

3. Landwirtschaftliche Maschine nach Anspruch 1, **dadurch gekennzeichnet, dass** zwischen der einen Arbeitsleitung (30L), an welche der Druckspeicher (45) angeschlossen ist, und dem Druckspeicher (45) eine Drosselblende (49) vorgesehen ist.

4. Landwirtschaftliche Maschine nach den Ansprüchen 2 und 3, **dadurch gekennzeichnet, dass** die Drosselblende (35) in der Arbeitsleitung (30 L, 30R) einen größeren Drosselquerschnitt aufweist als die Drosselblende (49) beim Druckspeicher (45), vorzugsweise einen in etwa doppelt so großen Drosselquerschnitt.

5. Landwirtschaftliche Maschine nach wenigstens einem der vorhergehenden Ansprüche, **dadurch gekennzeichnet, dass** der Stromteiler (33) von jeweils einer das Steuerventil (26) mit der jeweiligen Arbeitsleitung (30L, 30R) verbindenden Leitungsschleife (40, 43) umgangen wird, in der ein in Strömungsrichtung zum Hydraulikzylinder (ZL, ZR) sperrendes Rückschlagventil (48, 41) enthalten ist, und dass der Druckspeicher (45) an die eine Leitungsschleife (43) oder die Arbeitsleitung (30L) angeschlossen ist.

6. Landwirtschaftliche Maschine nach Anspruch 5, **dadurch gekennzeichnet, dass** die Drosselblende (49) zwischen einem Anschlussknoten (44) in der einen Leitungsschleife (43) und dem Druckspeicher (45) und das Rückschlagventil (48) zwischen dem Anschlussknoten (44) und einem Knoten (50) zwischen der Leitungsschleife (43) und der Hauptleitung (30) angeordnet sind.

7. Landwirtschaftliche Maschine nach wenigstens einem der vorhergehenden Ansprüche, **dadurch gekennzeichnet, dass** für einen doppelseitig beaufschlagbaren Hydraulikzylinder (ZL, ZR) vom Steuerventil (26) eine weitere, sich zu den Hydraulikzylindern (ZL, ZR) aufzweigende, den Stromteiler (33) umgehende Arbeitsleitung (29) ausgeht, und dass in jedem Arbeitsleitungszweig (29L, 29R) ein Drosselrückschlagventil (36L, 36R) oder jeweils parallel ein in Strömungsrichtung zum Hydraulikzylinder (ZL, ZR) sperrendes Rückschlagventil (37) und eine Drosselblende (38) vorgesehen ist bzw. sind.

8. Landwirtschaftliche Maschine nach Anspruch 7, **dadurch gekennzeichnet, dass** der Drosselquerschnitt der Drosselblende (38) größer ist als der Drosselquerschnitt der Drosselblende (35).

9. Landwirtschaftliche Maschine nach wenigstens einem der vorhergehenden Ansprüche, **dadurch gekennzeichnet, dass** in jeder Arbeitsleitung (30L, 30R) zu einer Seite (31L, 31R) ein in Abströmrichtung zum Stromteiler (33) sperrendes Sperrventil (32) vorgesehen ist, das mit Steuerdruck aus dem dieser Seite der Maschine (M) zugehörigen Arbeitsleitungszweig (29L, 29R) hydraulisch entsperrbar ist.

10. Landwirtschaftliche Maschine nach Anspruch 7, **dadurch gekennzeichnet, dass** in der weiteren Arbeitsleitung (29) ein, vorzugsweise mechanisch betätigbares, 2/2-Wegeventil (31) enthalten ist.

11. Landwirtschaftliche Maschine nach Anspruch 1, **dadurch gekennzeichnet, dass** sich in der Transportstellung (T) zumindest Bodenlaufräder (18, 18', 20, 20') von Werkzeugen (W) und/oder Werkzeuge (W) an gelenkig verbundenen Tragarmen (6, 8, 10, 12) der linken und rechten Seitenrahmenabschnitte gegenseitig überlappen.

12. Landwirtschaftliche Maschine nach Anspruch 11, **dadurch gekennzeichnet, dass** die sich in der Transportstellung (T) gegenseitig überlappenden Bodenlaufräder (18, 18', 20, 20') an den Werkzeugen (W) oder den Seitenrahmenabschnitten unterschiedlich gekröpfte und/oder orientierte Aufhängungen (19, 22; 21, 23) aufweisen.

13. Landwirtschaftliche Maschine nach wenigstens einem der vorhergehenden Ansprüche, **dadurch gekennzeichnet, dass** jeder Seitenrahmenabschnitt zwei bis vier über Gelenke (7, 9, 11) schwenkbar verbundene Tragarme (6, 8, 10, 12) umfasst.

14. Verfahren zum im Wesentlichen gleichzeitigen Hochklappen linker und rechter, im Wesentlichen gegenüberliegender Seitenrahmenabschnitte am Tragrahmen (2) einer landwirtschaftlichen Maschine (M), insbesondere einer Heuwerbungsmaschine, mittels jeweils zumindest eines Hydraulikzylinders (ZL, ZR) aus einer abgesenkten Arbeitsstellung (A) in eine zueinander hochgeklappte Transportstellung (T), in der sich mit beiden Seitenrahmenabschnitten bewegende Komponenten gegenseitig überlappen, wobei zum Hochklappen jeweils eine Seite (31L, 31R) des Hydraulikzylinders (ZL, ZR) aus einer Arbeitsleitung (30L, 30R) einer Hydraulikschaltung (H) beaufschlagbar ist, **dadurch gekennzeichnet, dass** die beiden Seitenrahmenabschnitte beim Hochkappen zur Transportstellung (T) relativ zum Tragrahmen (2) mit gleichen Geschwindigkeiten bewegt werden, ausgenommen wenigstens eine im Verlauf und vor dem Ende der Hochklappbewegungen gesteuerte Verzögerungs- oder Stillstandsphase für einen Seitenrahmenabschnitt, wobei die Verzögerungs- oder Stillstandsphase durch Füllen eines Speichervolumens (46) eines vor dem Hochklappen entleerten Druckspeichers (45) gesteuert wird.

## Claims

1. Agricultural machine (M), in particular hay making machine, comprising a carrying frame (2) having an undercarriage (3), at which carrying frame (2) respective left and right side frame sections which are opposite to each other at the carrying frame (2) and carry tools (W) are adjustable by at least one hydraulic cylinder (ZL, ZR) between a lower working position (A) toward each other into an upper transport position (T), in which transport position (T) components moving with both side frame sections overlap each other, and a hydraulic circuit (H) connected with at least one control valve (26), within which hydraulic circuit (H) working lines (30L, 30R) extend to sides (31L, 31R) of the hydraulic cylinders (ZL, ZR) which sides are hydraulically actuable for folding the left and right side frame sections upwardly, **characterised in that** the hydraulic circuit (H) contains a flow divider (33) between the control valve (26) and both working lines (30L, 30R), the flow divider (33) dividing a volume flow with a ratio of 50:50 into the working lines (30L, 30R), the volume flow being supplied by the control valve (26) to the actuable sides (31L, 31R), and that at least one pressure accumulator (45) is connected with one working line (30L or 30R), the accumulation volume (46) of the pressure accumulator (45) being emptied prior to folding the side frame sections upwardly.

2. Agricultural machine according to claim 1, **characterised in that** a throttling aperture (35) is arranged in the respective working line (30L, 30R), and that the throttling apertures (35) have substantially equally throttling cross sections.

3. Agricultural machine according to claim 1, **characterised in that** a throttling aperture (49) is arranged between the one working line (30L) to which the pressure accumulator (45) is connected, and the pressure accumulator (45).

4. Agricultural machine according to claims 2 and 3, **characterised in that** the throttling aperture (35) arranged in the working line (30L, 30R) has a larger throttling cross section than the throttling aperture (49) arranged close to the pressure accumulator (45), preferably a throttling cross section which is about double as large.

5. Agricultural machine according to at least one of the preceding claims, **characterised in that** the flow divider (33) is deviated by a line loop (40, 43) directly connecting the control valve (26) and the respective working line (30L, 30R), that a check valve (48, 41) is contained in the line loop (40, 43), the check valve (48, 41) blocking in flow direction to the hydraulic cylinder (ZL, ZR), and that the pressure accumulator (45) is connected with one line loop (43) or the working line (30L), respectively.

6. Agricultural machine according to claim 5, **characterised in that** the throttling aperture (49) is arranged between a connecting node (44) in the one line loop (43) and the pressure accumulator (45), and that the check valve (48) is arranged between the connecting node (44) and a node (50) between the line loop (43) and the main line (30).

7. Agricultural machine according to at least one of the preceding claims, **characterised in that** for a double actuated hydraulic cylinder (ZL, ZR) a further working line (29) extends from the control valve (26) which branches off to the hydraulic cylinders (ZL, ZR) and deviates the flow divider (33), and that in each branch of the working line (29L, 29R) is/are arranged a throttling check valve (36L, 36R) or respectively a check valve (37) blocking in flow direction to the hydraulic cylinder (ZL, ZR) and a parallel throttling aperture (38).

8. Agricultural machine according to claim 7, **characterised in that** the throttling cross section of the throttling aperture (38) is larger than the throttling cross section of the throttling aperture (35).

9. Agricultural machine according to at least one of the preceding claims, **characterised in that** a blocking valve (32) is arranged in each working line (30L, 30R) extending to one side (31L, 31R), the blocking valve (32) blocking in discharge flow direction to the flow divider, the blocking valve (32) being adapted to be hydraulically opened by control pressure from the working line-branch (29L, 29R) belonging to this side of the machine (M).

10. Agricultural machine according to claim 7, **characterised in that** a preferably mechanically actuable, 2/2-ways directional control valve (31) is provided in the further working line (29).

11. Agricultural machine according to claim 1, **characterised in that** in the transport position (T) at least ground wheels (18, 18', 20, 20') of tools (W) and/or tools (W) situated on carrying arms (6, 8, 10, 12) of the left and right side frame sections overlap each other, the carrying arms being connected in articulated fashion.

12. Agricultural machine according to claim 11, **characterised in that** the ground wheels (18, 18', 20, 20') which overlap each other in the transport position (T) have differently cranked and/or differently oriented suspensions (19, 22; 21, 23) at the tools (W) or the side frame sections.

13. Agricultural machine according to at least one of preceding claims, **characterised in that** each side frame section comprises two to four carrying arms (6, 8, 10, 12) pivotably connected via joints (7, 9, 11).

14. Method for folding upwardly substantially simultaneously left and right side frame sections at the carrying frame (2) of an agricultural machine (M), the side frame sections being situated substantially opposite to each other, in particular of a hay making machine, by means of at least one respective hydraulic cylinder (ZL, ZR) from a lower working position (A) into a transport position (T) in which transport position (T) the side frame sections are folded upwardly and towards another, and components being moved with both side frame sections overlap each other, whereby for folding upwardly a respective side (31L, 31R) of the hydraulic cylinder (ZL, ZR) is hydraulically actuated from a working line (30L, 30R) of a hydraulic circuit (H) **characterised in that** both side frame sections are moved in relation to the carrying frame (2) with equal speeds when being folded upwardly into the transport position, except of at least one delay phase or stop phase for one side frame section, the delay phase or stop phase being controlled during the course and prior to the termination of the folding movements, wherein the delay phase or stop phase is controlled by filling an accumulating volume (46) of a pressure accumulator (45) which has been emptied prior to the folding process.

## Revendications

1. Machine agricole (M), en particulier machine de fenaison, avec un cadre porteur (2) présentant un châssis (3), sur lequel des parties de cadre latérales gauche et droite, sensiblement opposées l'une à l'autre sur le cadre porteur (2) et portant des outils (W), peuvent être réglées chacune par au moins un vérin hydraulique (ZL, ZR) entre une position de travail (A) abaissée et une position de transport (T) relevée l'une par rapport à l'autre, dans laquelle les composants se déplaçant avec les deux parties de cadre latérales se chevauchent, et avec un circuit hydraulique (H) relié à au moins une soupape de commande (26), dans lequel des conduites de travail (30L, 30R) mènent au moins aux côtés (31L, 31R) des vérins hydrauliques (ZL, ZR) pouvant être sollicités pour le repliage des parties latérales gauche et droite du châssis, **caractérisé en ce que en ce que** le circuit hydraulique (H) entre la soupape de commande (26) et les deux conduites de travail (30L, 30R) contient un diviseur de débit (33) qui, au moins dans la direction d'écoulement vers les côtés (31L, 31R) pouvant être sollicités, présente un débit volumique délivré par la soupape de commande (26) d'un rapport de 50:50 dans les conduites de travail (30L, 30R), et qu'au moins un accumulateur de pression (45) est raccordé à une conduite de travail (30L ou 30R), dont le volume d'accumulateur (46) peut être vidé avant d'être replié.

2. Machine agricole selon la revendication 1, **caractérisée en ce qu'**un orifice d'étranglement (35) est prévu à chaque fois dans la conduite de travail (30L, 30R) et **en ce que** les orifices d'étranglement (35) présentent des sections d'étranglement au moins sensiblement égales.

3. Machine agricole selon la revendication 1, **caractérisée en ce qu'**un orifice d'étranglement (49) est prévu entre une conduite de travail (30L), à laquelle est raccordé le réservoir de pression (45), et le réservoir de pression (45) est un orifice d'étranglement (49).

4. Machine agricole selon les revendications 2 et 3, **caractérisée en ce que** l'orifice d'étranglement (35) dans la conduite de travail (30L, 30R) présente une section d'étranglement plus grande que l'orifice d'étranglement (49) au niveau du réservoir de pression (45), de préférence une section d'étranglement qui est environ deux fois plus grande.

5. Machine agricole selon au moins l'une des revendications précédentes, **caractérisé en ce que** le diviseur de débit (33) est contourné par une boucle de conduites (40, 43) reliant la vanne de commande (26) à la conduite de travail (30L, 30R) respective, boucle de conduites (40, 43) dans laquelle se trouve un clapet anti-retour (48, 41) bloquant dans le sens de l'écoulement vers le cylindre hydraulique (ZL, ZR), et **en ce que** l'accumulateur de pression (45) est relié à une boucle de conduites (43) ou à la conduite de travail (30L).

6. Machine agricole selon la revendication 5, **caractérisée en ce que** l'orifice d'étranglement (49) est disposé entre un noeud de raccordement (44) dans la première boucle de conduites (43) et le réservoir de pression (45) et le clapet anti-retour (48) est disposé entre le noeud de raccordement (44) et un noeud (50) entre la boucle de conduites (43) et la conduite principale (30).

7. Machine agricole selon au moins l'une des revendications précédentes, **caractérisée en ce que** pour un vérin hydraulique (ZL, ZR) pouvant être sollicité des deux côtés, il est prévu un autre vérin hydraulique (ZL, ZR) qui bifurque de la soupape de commande (26) vers les vérins hydrauliques (ZL, ZR), le diviseur de débit (33), et **en ce qu'**il est prévu dans chaque branche de la conduite de travail (29L, 29R) ou dans chaque branche de la conduite de travail (29L, 29R) un clapet anti-retour d'étranglement (36L, 36R) ou un clapet anti-retour (37) qui bloque dans le sens de l'écoulement vers le cylindre hydraulique (ZL, ZR), et un orifice d'étranglement (38) sont prévus.

8. Machine agricole selon la revendication 7, **caractérisée en ce que** la section d'étranglement de l'orifice d'étranglement (38) est plus grande que la section d'étranglement de l'orifice d'étranglement (35).

9. Machine agricole selon au moins l'une des revendications précédentes, **caractérisée en ce que** dans chaque conduite de travail (30L, 30R) vers un côté (31L, 31R), il est prévu une soupape d'arrêt (32) qui se referme dans la direction d'écoulement vers le diviseur de débit (33) et qui peut être débloquée hydrauliquement avec une pression de commande provenant de la branche de conduite de travail (29L, 29R) associée à ce côté de la machine (M).

10. Machine agricole selon la revendication 7, **caractérisée en ce qu'**une soupape 2/2 voies (31), de préférence à commande mécanique, est contenue dans l'autre conduite de travail (29).

11. Machine agricole selon la revendication 1, **caractérisée en ce que** dans la position de transport (T), se chevauchent au moins les roues de roulement au sol (18, 18', 20, 20') d'outils (W) et/ou des appareils (W) sur des bras porteurs (6, 8, 10, 12) reliés de manière articulée à des sections de châssis latérales gauche et droite.

12. Machine agricole selon la revendication 11, **caractérisée en ce que** les roues de roulement au sol (18, 18', 20, 20') se chevauchant en position de transport (T) présentent des suspensions (19, 22 ; 21, 23) coudées et/ou orientées différemment sur les outils (W) ou les parties latérales du châssis.

13. Machine agricole selon au moins une des revendications précédentes, **caractérisée en ce que** chaque section de châssis latéral comprend deux à quatre bras porteurs (6, 8, 10, 12) reliés de manière pivotante par des articulations (7, 9, 11).

14. Procédé pour replier sensiblement simultanément des parties de châssis latérales gauche et droite, sensiblement opposées, sur le châssis porteur (2) d'une machine agricole (M), en particulier d'une machine de fenaison, au moyen d'au moins un vérin hydraulique (ZL, ZR) d'une position de travail (A) abaissée dans une position de transport (T) relevée l'une par rapport à l'autre, dans laquelle les composants se déplaçant avec les deux parties latérales du châssis se chevauchent, **caractérisé en ce que** pour le relevage, un côté (31L, 31R) du vérin hydraulique (ZL, ZR) peuvent être sollicités par une conduite de travail (30L, 30R) d'un circuit hydraulique (H), **caractérisé en ce que** les deux parties latérales du châssis sont déplacées à la même vitesse par rapport au châssis porteur (2) lorsque le véhicule est attelé en position de transport (T), à l'exception d'au moins une phase de décélération ou d'arrêt pour une section de cadre latéral, commandée pendant et avant la fin des mouvements de repliement, la phase de décélération ou d'arrêt étant commandée par le remplissage d'un volume de stockage (46) d'un dispositif de stockage de pression (45) vidé avant le repliement.
